# EUROPÄISCHE PATENTSCHRIFT

(11) **EP 0 861 720 B1**
(45) Veröffentlichungstag und Bekanntmachung des Hinweises auf die Patenterteilung: **05.10.2005**
(21) Anmeldenummer: 98102602.4
(22) Anmeldetag: 16.02.1998
(51) Int. Cl.: B30B 15/00, B23D 27/00, B23D 29/00

(54) **Tragbare Schere**
Portable shear
Cisaille portable

(30) Priorität: 01.03.1997 DE 29703737 U
(43) Veröffentlichungstag der Anmeldung: 02.09.1998
(73) Patentinhaber: Trumpf GmbH & Co, D-71254 Ditzingen (DE)
(72) Erfinder: Accola, Mathis, 7302 Landquart (CH); Crameri, Teodoro, 7205 Zizers (CH)
(74) Vertreter: Kohler Schmid Möbus

(56) Entgegenhaltungen:
- BE-A- 419 654
- DE-A- 2 141 521
- DE-C- 527 272
- FR-A- 2 615 434
- US-A- 4 033 252

## Beschreibung

Die Erfindung betrifft eine tragbare Schere vorzugsweise zur Blechbearbeitung, mit einem Stößelmesser, das motorisch angetrieben über einen Stößel in Hubrichtung relativ zu wenigstens einer mit ihm zusammenwirkenden Schneidkante hin und her bewegbar ist sowie mit einer Vorrichtung zur Einstellung des Abstandes von Stößelmesser und Schneidkante in Hubrichtung, welche einen einerseits mit dem Antriebsmotor und andererseits mit dem Stößelmesser in Verbindung stehenden sowie mit dem Stößel in Hubrichtung mitbewegbaren Gewinde-Stellantrieb umfaßt, mit wenigstens zwei miteinander in Gewindeeingriff befindlichen Stellgewindeteilen, von denen wenigstens eines um eine in Hubrichtung verlaufende Gewindeachse mittels eines antreibbaren und zu der Gewindeachse achsparallelen verzahnten Stellrades drehbar an dem verzahnten Stellrad in Drehrichtung abgestützt und relativ zu diesem in Hubrichtung verschiebbar ist.

Im Interesse der Erzielung eines optimalen Schneidergebnisses ist es erforderlich, beispielsweise bei Änderung der Dicke von zu bearbeitenden Blechen den Abstand von Stößelmesser und Schneidkante in Hubrichtung zu variieren. Der einzustellende Abstand von Stößelmesser und Schneidkante ist auch davon abhängig, ob die Schneidrichtung, das heißt die Vorschubrichtung der tragbaren Schere, geradlinig oder kurvenförmig ist. In Abhängigkeit von der gewählten Einstellung bewegt sich das Stößelmesser bei Schneidbetrieb über eine mehr oder weniger lange Strecke in Hubrichtung an der zugeordneten Schneidkante vorbei.

An einer aus CH 471 645 bekannten Schere der beschriebenen Gattung werden als Stellgewindeteile für die Verstellung des Stößelmessers gegenüber der Schneidkante eine Gewindehülse sowie ein mit der Gewindehülse in Gewindeeingriff befindlicher und einstükkig mit dem Stößelmesser ausgebildeter Gewindeschaft verwendet. Die Gewindehülse ist dabei an dem Scherenstößel um ihre Achse drehbar gelagert und kämmt mit einer an ihrem Mantel vorgesehenen Außenverzahnung mit der Außenverzahnung eines zylindrischen Zahnrades. Dieses wird durch ein weiteres zylindrisches, außenverzahntes Zahnrad angetrieben. Die Drehachsen der Zahnräder verlaufen parallel zueinander und sind seitlich gegeneinander versetzt. Gemeinschaftlich bilden die Zahnräder ein Zahnradgetriebe. Die Zähne der miteinander kämmenden Verzahnungen von Gewindehülse und Zahnrad verlaufen in Richtung der achsparallelen Drehachsen der beiden Getriebeteile. Ein in den Innenmantel der Gewindehülse eingearbeitetes Innengewinde befindet sich mit einem Außengewinde an dem das Stößelmesser tragenden Gewindeschaft in Eingriff. Der Gewindeschaft ist gegen Drehung um die Gewindeachse an dem Scherengrundkörper abgestützt. Wird die Gewindehülse mittels des Zahnradgetriebes drehend angetrieben, so verschiebt sich der Gewindeschaft und mit diesem das Stößelmesser in Richtung der Gewindeachse. Damit verbunden ist eine Verschiebung des Stößelmessers in Hubrichtung gegenüber der zugeordneten Schneidkante. Bei Betrieb der Schere wird die aus Gewindehülse und Gewindeschaft sowie dem Stößelmesser bestehende Baueinheit von dem Stößel in Hubrichtung mitgenommen, während das zum Antrieb der Gewindehülse um deren Drehachse dienende Zahnradgetriebe in Hubrichtung ortsunveränderlich an dem Scherengrundkörper gelagert ist. Hieraus resultiert eine Relativbewegung zwischen den Zähnen der Verzahnung an dem Außenmantel der Gewindehülse und den in die Zahnlükken dieser Verzahnung eingreifenden Zähnen des die Gewindehülse beaufschlagenden Zahnrades. Die Folge sind Verschleißerscheinungen an den einander zugeordneten Zahnflanken der beiden Verzahnungen, wodurch wiederum ein unerwünschtes Spiel zwischen den Zahnflanken in Drehrichtung bedingt wird. Dieses Spiel beeinträchtigt die Stellgenauigkeit bei der Einstellung des in Hubrichtung zwischen dem Stößelmesser und der Schneidkante bestehenden Abstandes und erschwert die Einhaltung eines einmal eingestellten Abstandes von Stößelmesser und Schneidkante. Das Zahnradgetriebe zum Antrieb der Gewindehülse benötigt einen seiner Konfiguration entsprechenden Einbauraum.

Ausgehend von dem beschriebenen Stand der Technik liegt der anmeldungsgemäßen Erfindung die Aufgabe zu Grunde, eine tragbare Schere mit kompakter Bauweise zu schaffen.

Im Sinne der Erfindung gelöst wird diese Aufgabe dadurch, daß an einer tragbaren Schere der eingangs genannten Art das verzahnte Stellrad einen axialen Durchbruch aufweist, daß das dem verzahnten Stellrad zugeordnete Stellgewindeteil das verzahnte Stellrad relativ zu diesem in Hubrichtung beweglich durchsetzt und daß das verzahnte Stellrad als Kegelstirnrad ausgebildet und über ein mit ihm kämmendes gleichfalls als Kegelstirnrad ausgebildetes Antriebsrad antreibbar ist, dessen Drehachse quer zu der Drehachse des verzahnten Stellrades verläuft. Infolgedessen nimmt der Antrieb des verzahnten Stellrades zur Betätigung des Gewinde-Stellantriebs wenig Einbauraum in Anspruch. Aufgrund der beschriebenen Ausgestaltung wird ein Kontakt zwischen dem sich mit dem Stößel in Hubrichtung bewegenden Stellgewindeteil und der Verzahnung des in der genannten Richtung stationären verzahnten Stellrades vermieden. Durch die Hubbewegung des betreffenden Stellgewindeteils verursachte Verschleißerscheinungen an der Verzahnung des verzahnten Stellrades sind infolgedessen ebenso ausgeschlossen wie mit derartigen Verschleißerscheinungen verbundene negative Auswirkungen auf die mit der Vorrichtung zur Einstellung des Abstandes von Stößelmesser und Schneidkante in Hubrichtung erzielbare Stellgenauigkeit.

Durch eine platzsparende Bauweise zeichnet sich eine bevorzugte Ausführungsform der erfindungsgemäßen tragbaren Schere aus, im Falle derer das dem verzahnten Stellrad zugeordnete Stellgewindeteil bolzenartig und mit einem axialen Außengewindeabschnitt ausgebildet ist, an welchem es sich mit einem an einem stößelmesserseitigen zweiten und ein Stößelteil bildenden Stellgewindeteil vorgesehenen Innengewinde relativ zu dem zweiten Stellgewindeteil um eine gemeinsame Gewindeachse drehbar in Gewindeeingriff befindet und im Falle derer das dem verzahnten Stellrad zugeordnete Stellgewindeteil an der dem zweiten Stellgewindeteil axial gegenüberliegenden Seite drehbar mit einem mit dem Antriebsmotor verbundenen weiteren Stößelteil in Verbindung steht.

In Weiterbildung der Erfindung ist außerdem vorgesehen, daß das dem verzahnten Stellrad zugeordnete Stellgewindeteil an einander axial gegenüberliegenden Seiten axiale Gewindeabschnitte mit gegenläufigen Gewinden aufweist, an welchen es sich mit entsprechenden Gewinden zweier weiterer Stellgewindeteile in Eingriff befindet. Aufgrund der beschriebenen Maßnahme hinsichtlich der Gangrichtungen der sich ergebenden Gewindepaarungen läßt sich mit der Drehung des dem verzahnten Stellrad zugeordneten Stellgewindeteils um seine Gewindeachse ein verhältnismäßig großer Stellhub des Gewinde-Stellantriebs in Achsrichtung erzielen.

Eine in Drehrichtung wirksame und fertigungstechnisch einfach herzustellende Formschlußverbindung zwischen dem verzahnten Stellrad und dem diesem zugeordneten Stellgewindeteil ist im Falle einer Variante der erfindungsgemäßen Schere dadurch hergestellt, daß der axiale Durchbruch des verzahnten Stellrades einen Mehrkant-Innenquerschnitt und das dem verzahnten Stellrad zugeordnete Stellgewindeteil an seinem an dem verzahnten Stellrad in Drehrichtung abgestützten axialen Abschnitt eine entsprechende Außenkontur aufweist.

An erfindungsgemäßen tragbaren Scheren, deren verzahntes Stellrad mittels einer um eine Achse drehbaren Handbetätigungseinrichtung antreibbar ist, wird in weiterer Ausgestaltung der Erfindung als Handbetätigungseinrichtung ein Handrad verwendet, dessen Drehachse quer zu der Hubrichtung des Stößels bzw. des Stößelmessers verläuft.

Zur Übertragung der von dem Benutzer der tragbaren Schere aufgebrachten Stellkraft auf das verzahnte Stellrad ist das Handrad erfindungsgemäß drehfest mit einem mit ihm koaxialen verzahnten, vorzugsweise innenverzahnten, Getrieberad verbunden, welches mit einem koaxial und drehfest mit dem als Kegelstirnrad ausgebildeten und mit dem verzahnten Stellrad kämmenden Antriebsrad verbundenen außenverzahnten Getrieberad kämmt. Das gesamte Stellgetriebe zeichnet sich aufgrund der beschriebenen und von einer verhältnismäßig geringen Anzahl von Getriebeteilen Gebrauch machenden Konfiguration durch eine platzsparende Bauweise aus und ist dementsprechend für tragbare, das heißt für Handscheren, besonders geeignet.

Damit der Bediener der Schere ohne weiteres erkennen kann, ob an der Maschine der für die vorzunehmende Werkstückbearbeitung optimale Abstand von Stößelmesser und Schneidkante in Hubrichtung eingestellt ist, steht der Gewinde-Stellantrieb in Weiterbildung der Erfindung mit einer Anzeigevorrichtung in Verbindung, welche eine den in Hubrichtung bestehenden Abstand des Stößelmessers von der Schneidkante repräsentierende Anzeige aufweist.

Das Handrad ist dabei bevorzugtermaßen als Teil der Anzeigevorrichtung vorgesehen und weist radial außenliegende sowie in Drehrichtung des Handrades gegeneinander versetzte Markierungen auf, welchen an einem dem Handrad radial benachbarten und bei Drehung des Handrades ortsfesten Gehäuseteil der tragbaren Schere als weiterer Teil der Anzeigevorrichtung eine Gegenmarkierung zugeordnet ist, wobei die der Gegenmarkierung des Gehäuseteils gegenüberliegende Markierung des Handrades den in Hubrichtung bestehenden Abstand des Stößelmessers von der Schneidkante repräsentiert. Dem Handrad kommt demnach vorteilhafterweise eine Doppelfunktion zu. Zum einen wird es als Teil des Stellgetriebes, zum andern auch als Bestandteil der Anzeigevorrichtung genutzt.

Vorteilhafterweise ist das Handrad erfindungsgemäß in verschiedenen Drehstellungen mit einem Grundkörper der tragbaren Schere verrastbar. Die sich dabei ergebende Formschlußverbindung zwischen Handrad und Grundkörper bietet eine konstruktiv einfache Möglichkeit zur Realisierung der generell zu gewährleistenden Sperrbarkeit des Stellgetriebes für die Einstellung des Abstandes von Stößelmesser und Schneidkante in Hubrichtung.

In Weiterbildung der Erfindung ist schließlich für das Handrad ein in Drehrichtung wirksamer Anschlag vorgesehen, dem ein an einem Grundkörper der tragbaren Schere angebrachter Gegenanschlag zugeordnet ist, wobei durch das Zusammenwirken von Anschlag und Gegenanschlag der Winkel der Drehung des Handrades um seine Drehachse auf 360° begrenzt ist. Aufgrund der beschriebenen Drehwinkelbegrenzung ist sichergestellt, daß jede Drehstellung des Handrades bzw. jede Markierung des Handrades lediglich einen einzigen, definierten Abstand des Stößelmessers von der zugehörigen Schneidkante anzeigt. Die Eindeutigkeit der Abstandseinstellung sichert einen Maschineneinsatz mit optimalen Schneidergebnissen.

Nachfolgend wird die Erfindung anhand schematischer Darstellung zu einem Ausführungsbeispiel näher erläutert. Es zeigen:

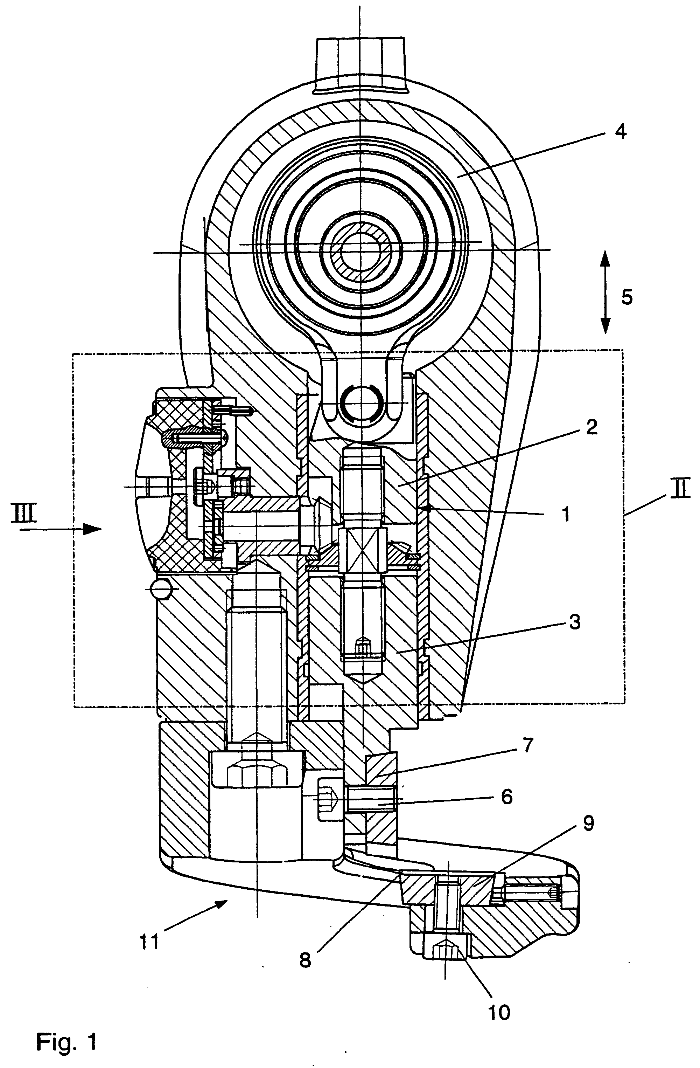

- Fig. 1:: eine tragbare Blechschere mit über ein Handrad höhen- verstellbarem Stößelmesser in einer Schnittdarstellung mit einer senkrecht zu der Vorschubrichtung der Maschi- ne verlaufenden Schnittebene,

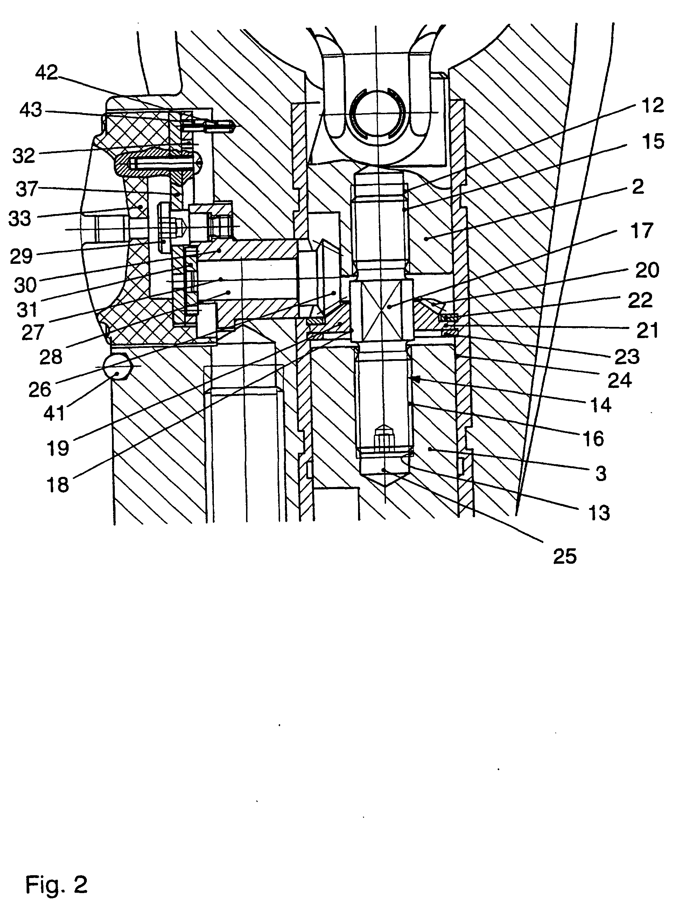

- Fig. 2:: eine vergrößerte Darstellung des Ausschnitts II von Fi- gur 1,
- Fig. 3:: das Handrad der Blechschere gemäß den Figuren 1 und 2 in der Draufsicht in Richtung des Pfeils III in Figur 1 und
- Fig. 4:: die Rückseite des Handrads gemäß Figur 3.

Die dargestellte tragbare Blechschere besitzt einen Stößel 1 mit einem oberen Stößelteil 2 und einem unteren Stößelteil 3. Mittels eines elektrischen Antriebsmotors 4 ist der Stößel 1 in einer durch einen Doppelpfeil 5 veranschaulichten Hubrichtung heb- und senkbar.

An dem unteren Stößelteil 3 ist mittels einer Befestigungsschraube 6 ein Stößelmesser 7 angebracht, welches von dem motorisch angetriebenen Stößel 1 in Hubrichtung 5 mitgenommen wird. Das Stößelmesser 7 wirkt bei der Werkstückbearbeitung mit einer Schneidkante 8 eines Schneidtischmessers 9 zusammen. Das Schneidtischmesser 9 ist mittels einer Befestigungsschraube 10 an einem bei Hin- und Herbewegung des Stößels 1 in Hubrichtung 5 ortsunveränderlichen Schneidtisch 11 fixiert. Das obere Stößelteil 2 ist mit einem Innengewinde 12, das untere Stößelteil 3 mit einem Innengewinde 13 versehen. In die Innengewinde 12,13 greift ein Stellbolzen 14 mit axialen Außengewindeabschnitten 15,16 ein. Dabei sind das Innengewinde 12 des oberen Stößelteils 2 sowie das diesem zugeordnete Gewinde des Außengewindeabschnitts 15 des Stellbolzens 14 rechtsläufig, das Innengewinde 13 an dem unteren Stößelteil 3 sowie das zugehörige Gewinde an dem Außengewindeabschnitt 16 des Stellbolzens 14 linksläufig. Zwischen den Außengewindeabschnitten 15,16 besitzt der Stellbolzen 14 einen axialen Abschnitt 17 mit Vierkantquerschnitt, wobei die Eckbereiche des axialen Abschnitts 17 abgerundet sind. Die Stößelteile 2,3 sowie der Stellbolzen 14 bilden die Stellgewindeteile des Gewinde-Stellantriebs der dargestellten Blechschere.

Der axiale Abschnitt 17 des Stellbolzens 14 durchsetzt einen entsprechend konturierten axialen Durchbruch 18 eines als großes Kegelstirnrad 19 ausgebildeten verzahnten Stellrades. Dieses weist radial außerhalb einer Verzahnung 20 einen gegenüber dieser radial vorstehenden Außenbund 21 auf, an welchem es mittels Sprengringen 22,23 in einer Stößelführung 24 der Blechschere in Hubrichtung 5 gehalten und um eine in Hubrichtung 5 verlaufende sowie mit den Gewindeachsen der Stößelteile 2,3 und des Stellbolzens 14 zusammenfallende Achse 25 drehbar gelagert ist.

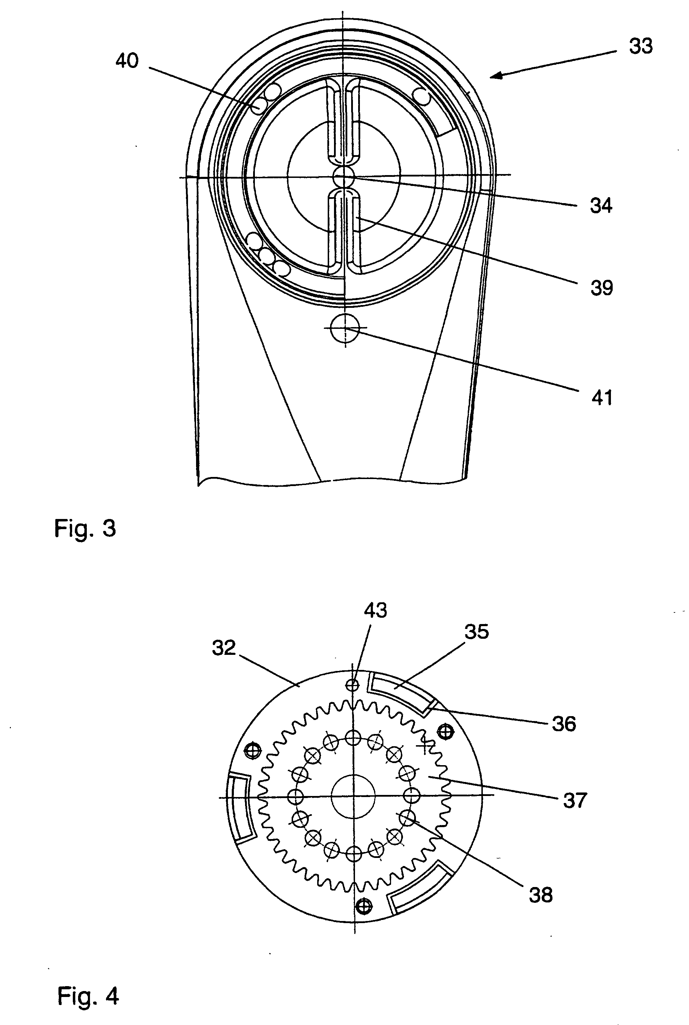

Mit dem großen Kegelstirnrad 19 kämmt ein Antriebsrad in Form eines kleinen Kegelstirnrades 26, das um eine senkrecht zu der Achse 25 des großen Kegelstirnrades 19 verlaufende Drehachse 27 drehbar an einem Grundkörper der Blechschere gelagert ist. Zur Lagerung des kleinen Kegelstirnrades 26 dient dabei eine drehfest mit diesem verbundene Kegelradwelle 28 sowie eine die Kegelradwelle 28 aufnehmende und mit dem Grundkörper der Blechschere über eine Befestigungsschraube verbundene Lagerbüchse 30. Auf dem von dem kleinen Kegelstirnrad 26 abliegenden Ende der Kegelradwelle 28 ist ein außenverzahntes zylindrisches Getrieberad 31 mit dem kleinen Kegelstirnrad 26 koaxial und drehfest verbunden angebracht. Das außenverzahnte Getrieberad 31 kämmt mit einem innenverzahnten, als Hohlrad 32 ausgebildeten Getrieberad. Letzteres ist drehfest mit einem Handrad 33 verbunden, das um eine senkrecht zu der Hubrichtung 5 des Stößels verlaufende Drehachse 34 von Hand drehbar ist. Wie Figur 4 im einzelnen zeigt, ist das Handrad 33 zur Herstellung einer formschlüssigen Verbindung mit dem Hohlrad 32 mit Klauen 35 versehen, die in entsprechende Ausnehmungen 36 des Hohlrades 32 eingreifen. An dem Hohlrad 32 befindet sich ein Anschlag in Form eines Anschlagstiftes 43, dem als Gegenanschlag ein stiftartiger Drehanschlag 42 an dem Grundkörper der Blechschere zugeordnet ist.

In axialer Richtung zwischen dem Hohlrad 32 und dem Handrad 33 ist eine Lagerscheibe 37 angeordnet, welche drehfest mit dem Hohlrad 32 und dem Handrad 33 verbunden ist und radial innerhalb der Innenverzahnung des Hohlrades 32 mit einer Mehrzahl von auf einem Kreisbogen um die Drehachse 34 des Handrades 33 angeordneten Rastöffnungen 38 versehen ist. Den Rastöffnungen 38 ist eine federbelastete Rastkugel zugeordnet, die sich unter Kraftbeaufschlagung in Richtung auf das Handrad 33 an der Lagerbüchse 30 der Kegelradwelle 28 abstützt. Zur radialen und axialen Abstützung des Handrads 33 über die Mittenbohrung der Lagerscheibe 37 dient eine in die Lagerbüchse 30 eingeschraubte Bundachse 29.

Wie aus Figur 3 hervorgeht, ist das Handrad 33 an seiner dem Benutzer der Maschine zugewandten Außenseite mit einer Griffleiste 39 sowie radial außenliegenden und in Drehrichtung des Handrades 33 gegeneinander versetzten Markierungen 40 versehen. Den Markierungen 40 des Handrades 33 zugeordnet ist eine an dem Gehäuse der Blechschere angebrachte kugelartige Gegenmarkierung 41.

Soll nun der in Hubrichtung 5 zwischen dem Stößelmesser 7 und der Schneidkante 8 des Schneidtischmessers 9 bestehende Abstand variiert werden, wie dies erforderlich ist, wenn sich die Dicke des zu bearbeitenden Blechs ändert oder wenn zwischen einem geradlinigen und einem kurvenförmigen Vorschub der Blechschere gewechselt wird und was bei eingeschaltetem Antriebsmotor 4 möglich ist, so ist das Handrad 33 von dem Maschinenbenutzer um seine Drehachse 34 zu drehen. Dabei treibt das Handrad 33 über das mit ihm drehfest verbundene Hohlrad 32 das außenverzahnte Getrieberad 31 an, dessen Drehbewegung sich über die Kegelradwelle 28 auf das kleine Kegelstirnrad 26 überträgt. Das kleine Kegelstirnrad 26 wiederum treibt das große Kegelstirnrad 19 um dessen Achse 25 an.

Aufgrund des zwischen dem großen Kegelstirnrad 19 und dem Stellbolzen 14 über den axialen Durchbruch 18 des Kegelstirnrads 19 und den axialen Abschnitt 17 des Stellbolzens 14 bestehenden Formschlusses nimmt das große Kegelstirnrad 19 den Stellbolzen 14 in Drehrichtung mit. Die Stößelteile 2,3 sind dabei gegen Mitnahme durch den Stellbolzen 14 in dessen Drehrichtung gehalten. In Abhängigkeit von dem gewählten Drehsinn des Handrades 33 sowie der daraus resultierenden Drehrichtung des großen Kegelstirnrades 19 werden die Außengewindeabschnitte 15,16 des Stellbolzens 14 in die Innengewinde 12,13 hinein- oder aus diesen herausgedreht. Da sowohl das obere Stößelteil 2 als auch das untere Stößelteil 3 undrehbar abgestützt sind, ist mit dem Ein- oder Ausschrauben des Stellbolzens 14 eine axiale Verlagerung des Stößelmessers 7 in Hubrichtung 5 verbunden. Nachdem die Innengewinde 12,13 des oberen Stößelteils 2 sowie des unteren Stößelteils 3 bzw. die zugeordneten Gewinde an den Außengewindeabschnitten 15,16 des Stellbolzens 14 paarweise gegenläufig ausgebildet sind, bedingt eine Drehung des Stellbolzens 14 gleichzeitig eine axiale Verschiebung des Stellbolzens 14 gegenüber dem oberen Stößelteil 2 und eine axiale Verlagerung des unteren Stößelteils 3 gegenüber dem Stellbolzen 14. Damit verbunden ist ein Annäherung des Stößelmessers 7 an die Schneidkante 8 des Schneidtischmessers 9 oder bei entgegengesetztem Drehsinn des Handrades 33 eine Vergrößerung des zwischen Stößelmesser 7 und Schneidkante 8 in Hubrichtung 5 bestehenden Abstandes.

In dem dargestellten Beispielsfall erfolgt die Verstellung des Abstandes von Stößelmesser 7 und Schneidkante 8 stufenartig, wobei die einzelnen Stellstufen durch den gegenseitigen Versatz der Rastöffnungen 38 an der Lagerscheibe 37 in Drehrichtung des Handrades 33 vorgegeben werden. Bei Betätigen des Handrades 33 tritt die an der Lagerbüchse 30 für die Kegelradwelle 28 abgestützte federbelastete Kugel aus der ihr zunächst zugeordneten Rastöffnung 38 aus und rastet nach Drehen des Handrades 33 um einen entsprechenden Drehwinkel in der in Drehrichtung benachbarten Rastöffnung 38 wieder ein. Der Drehanschlag 42 an dem Grundkörper der Blechschere sorgt im Zusammenwirken mit dem Anschlagstift 43 des Hohlrades 32 dafür, daß das Handrad 33 um maximal 360° gedreht werden kann. Für den Maschinenbenutzer ist der momentan in Hubrichtung 5 bestehende Abstand von Stößelmesser 7 und Schneidkante 8 des Schneidtischmessers 9 anhand der der Gegenmarkierung 41 an dem Maschinengehäuse gegenüberliegenden Markierung 40 des Handrades 3 ablesbar.

## Patentansprüche

1. Tragbare Schere vorzugsweise zur Blechbearbeitung, mit einem Stößelmesser (7), das motorisch angetrieben über einen Stößel (1) in Hubrichtung (5) relativ zu wenigstens einer mit ihm zusammenwirkenden Schneidkante (8) hin und her bewegbar ist sowie mit einer Vorrichtung zur Einstellung des Abstandes von Stößelmesser (7) und Schneidkante (8) in Hubrichtung (5), welche einen einerseits mit dem Antriebsmotor (4) und andererseits mit dem Stößelmesser (7) in Verbindung stehenden sowie mit dem Stößel (1) in Hubrichtung (5) mitbewegbaren Gewinde-Stellantrieb (2,3,14) umfaßt, mit wenigstens zwei miteinander in Gewindeeingriff befindlichen Stellgewindeteilen (2,3,14), von denen wenigstens eines (14) um eine in Hubrichtung (5) verlaufende Gewindeachse (25) mittels eines antreibbaren und zu der Gewindeachse (25) achsparallelen verzahnten Stellrades (19) drehbar an dem verzahnten Stellrad (19) in Drehrichtung abgestützt und relativ zu diesem in Hubrichtung (5) verschiebbar ist, **dadurch gekennzeichnet, daß** das verzahnte Stellrad (19) einen axialen Durchbruch (18) aufweist, daß das dem verzahnten Stellrad (19) zugeordnete Stellgewindeteil (14) das verzahnte Stellrad (19) relativ zu diesem in Hubrichtung (5) beweglich durchsetzt und daß das verzahnte Stellrad (19) als Kegelstirnrad ausgebildet und über ein mit ihm kämmendes, gleichfalls als Kegelstirnrad ausgebildetes Antriebsrad (26) antreibbar ist, dessen Drehachse (27) quer zu der Drehachse (25) des verzahnten Stellrades (19) verläuft.

2. Tragbare Schere nach Anspruch 1, **dadurch gekennzeichnet, daß** das dem verzahnten Stellrad (19) zugeordnete Stellgewindeteil (14) bolzenartig und mit einem axialen Außengewindeabschnitt (16) ausgebildet ist, an welchem es sich mit einem an einem stößelmesserseitigen zweiten und einen Stößelteil (3) bildenden Stellgewindeteil (3) vorgesehenen Innengewinde (13) relativ zu dem zweiten Stellgewindeteil (3) um eine gemeinsame Gewindeachse (25) drehbar in Gewindeeingriff befindet und daß es an der dem zweiten Stellgewindeteil (3) axial gegenüberliegenden Seite drehbar mit einem mit dem Antriebsmotor (4) verbundenen weiteren Stößelteil (2) in Verbindung steht.

3. Tragbare Schere nach einem der vorhergehenden Ansprüche, **dadurch gekennzeichnet, daß** das dem verzahnten Stellrad (19) zugeordnete Stellgewindeteil (14) an einander axial gegenüberliegenden Seiten axiale Gewindeabschnitte (15,16) mit gegenläufigen Gewinden aufweist, an welchen es sich mit entsprechenden Gewinden (12,13) zweier weiterer Stellgewindeteile (2,3) in Eingriff befindet.

4. Tragbare Schere nach einem der vorhergehenden Ansprüche, **dadurch gekennzeichnet, daß** der axiale Durchbruch (18) des verzahnten Stellrades (19) einen Mehrkant-Innenquerschnitt und das dem verzahnten Stellrad (19) zugeordnete Stellgewindeteil (14) an seinem an dem verzahnten Stellrad (19) in Drehrichtung abgestützten axialen Abschnitt eine entsprechende Außenkontur aufweist.

5. Tragbare Schere nach einem der vorhergehenden Ansprüche, wobei das verzahnte Stellrad (19) mittels einer um eine Achse (34) drehbaren Handbetätigungseinrichtung antreibbar ist, **dadurch gekennzeichnet, daß** als Handbetätigungseinrichtung ein Handrad (33) vorgesehen ist, dessen Drehachse (34) quer zu der Hubrichtung (5) des Stößels (1) bzw. des Stößelmessers (7) verläuft.

6. Tragbare Schere nach einem der vorhergehenden Ansprüche, **dadurch gekennzeichnet, daß** das Handrad (33) drehfest mit einem mit ihm koaxialen verzahnten Getrieberad (32) verbunden ist, welches mit einem koaxial und drehfest mit dem als Kegelstirnrad (26) ausgebildeten und mit dem verzahnten Stellrad (19) kämmenden Antriebsrad (26) verbundenen außenverzahnten Getrieberad (31) kämmt.

7. Tragbare Schere nach einem der vorhergehenden Ansprüche, **dadurch gekennzeichnet, daß** der Gewinde-Stellantrieb (2,3,14) mit einer Anzeigevorrichtung in Verbindung steht mit einer den in Hubrichtung (5) bestehenden Abstand des Stößelmessers (7) von der Schneidkante (8) repräsentierenden Anzeige.

8. Tragbare Schere nach einem der vorhergehenden Ansprüche, **dadurch gekennzeichnet, daß** das Handrad (33) als Teil der Anzeigevorrichtung vorgesehen ist und radial außenliegende sowie in Drehrichtung des Handrades (33) gegeneinander versetzte Markierungen (40) aufweist, welchen an einem dem Handrad (33) radial benachbarten und bei Drehung des Handrades (33) ortsfesten Gehäuseteil der tragbaren Schere als weiterer Teil der Anzeigevorrichtung eine Gegenmarkierung (41) zugeordnet ist, wobei die der Gegenmarkierung (41) des Gehäuseteils gegenüberliegende Markierung (40) des Handrades (33) den in Hubrichtung (5) bestehenden Abstand des Stößelmessers (7) von der Schneidkante (8) repräsentiert.

9. Tragbare Schere nach einem der vorhergehenden Ansprüche, **dadurch gekennzeichnet, daß** das Handrad (33) in verschiedenen Drehstellungen mit einem Grundkörper der tragbaren Schere verrastbar ist.

10. Tragbare Schere nach einem der vorhergehenden Ansprüche, **dadurch gekennzeichnet, daß** für das Handrad (33) ein in dessen Drehrichtung wirksamer Anschlag (43) vorgesehen ist, dem ein an einem Grundkörper der tragbaren Schere angebrachter Gegenanschlag (42) zugeordnet ist, wobei durch das Zusammenwirken von Anschlag (43) und Gegenanschlag (42) der Winkel der Drehung des Handrades (33) um seine Drehachse (34) auf 360° begrenzt ist.

## Claims

1. Portable shears, preferably for processing sheet metal, having a ram blade (7), which can be moved back and forth by means of a ram (1) in a manner driven by a motor in a stroke direction (5) relative to at least one cutting edge (8) which co-operates therewith, and having a device for adjusting the spacing of the ram blade (7) and the cutting edge (8) in the stroke direction (5), which device comprises a threaded adjusting drive (2, 3, 14) which is connected to the drive motor (4) at one side and to the ram blade (7) at the other side and which can also be moved in the stroke direction (5) with the ram (1), having at least two threaded adjusting elements (2, 3, 14) which are in threaded engagement with each other and at least one (14) of which is supported on a toothed adjusting wheel (19) in the direction of rotation, so as to be able to rotate about a thread axis (25) extending in the stroke direction (5) by means of the drivable adjusting wheel (19) toothed in an axially parallel manner relative to the thread axis (25), and which can be displaced in the stroke direction (5) relative to the toothed adjusting wheel (19), **characterised in that** the toothed adjusting wheel (19) has an axial opening (18), **in that** the threaded adjusting element (14) which is associated with the toothed adjusting wheel (19) extends through the toothed adjusting wheel (19) in a movable manner relative thereto in the stroke direction (5), and **in that** the toothed adjusting wheel (19) is in the form of a tapered spur wheel and can be driven by means of a drive wheel (26) which meshes therewith, which is also in the form of a tapered spur wheel and whose axis of rotation (27) extends transversely to the axis of rotation (25) of the toothed adjusting wheel (19).

2. Portable shears according to claim 1, **characterised in that** the threaded adjusting element (14) associated with the toothed adjusting wheel (19) is constructed so as to be of pin-like form and to have an axial outer threaded portion (16), by means of which it is in threaded engagement with an inner thread (13), which is provided on a second threaded adjusting element (3) which is located at the ram blade side and which forms a ram portion (3), so as to be able to rotate about a common thread axis (25) relative to the second threaded adjusting element (3), and **in that** it is, at the side that is axially opposite the second threaded adjusting element (3), connected to another ram portion (2) which is connected to the drive motor (4) so as to be able to rotate.

3. Portable shears according to either of the preceding claims, **characterised in that** the threaded adjusting element (14) associated with the toothed adjusting wheel (19) has, at sides which are axially opposite each other, axial threaded portions (15, 16) having opposing threads by means of which it is in engagement with corresponding threads (12, 13) of two other threaded adjusting elements (2, 3).

4. Portable shears according to any one of the preceding claims, **characterised in that** the axial opening (18) of the toothed adjusting wheel (19) has a polygonal inner cross-section and the threaded adjusting element (14) associated with the toothed adjusting wheel (19) has a corresponding outer contour at the axial portion thereof supported on the toothed adjusting wheel (19) in the direction of rotation.

5. Portable shears according to any one of the preceding claims, wherein the toothed adjusting wheel (19) can be driven by means of a manual activation device which can be rotated about an axis (34), **characterised in that** a hand-operated wheel (33) is provided as the manual activation device and the axis of rotation (34) thereof extends transversely to the stroke direction (5) of the ram (1) or of the ram blade (7).

6. Portable shears according to any one of the preceding claims, **characterised in that** the hand-operated wheel (33) is connected in a rotationally secure manner to a toothed gear wheel (32) which is coaxial therewith and which meshes with an externally-toothed gear wheel (31) which is connected in a coaxial and rotationally secure manner to the drive wheel (26) which is in the form of a tapered spur wheel (26) and which meshes with the toothed adjusting wheel (19).

7. Portable shears according to any one of the preceding claims, **characterised in that** the threadedadjusting drive (2, 3, 14) is connected to a display device having a display which represents the spacing of the ram blade (7) relative to the cutting edge (8), which spacing is provided in the stroke direction (5).

8. Portable shears according to any one of the preceding claims, **characterised in that** the hand-operated wheel (33) is provided as part of the display device and has markings (40) which are located in a radially outer position and which are offset relative to each other in the direction of rotation of the hand-operated wheel (33) and with which a counter-marking (41) is associated on a housing portion of the portable shears acting as an additional part of the display device, which housing portion is radially adjacent to the hand-operated wheel (33) and which is stationary when the hand-operated wheel (33) is rotated, the marking (40) of the hand-operated wheel (33) that is opposite the counter-marking (41) of the housing portion representing the spacing of the ram blade (7) relative to the cutting edge (8), which spacing is provided in the stroke direction (5).

9. Portable shears according to any one of the preceding claims, **characterised in that** the hand-operated wheel (33) can be locked relative Lo a base member of the portable shears in various rotational positions.

10. Portable shears according to any one of the preceding claims, **characterised in that** there is provided for the hand-operated wheel (33) a stop (43) which is active in the direction of rotation thereof and with which a counter-stop (42), which is fitted to a base member of the portable shears, is associated, the angle of rotation of the hand-operated wheel (33) about the axis of rotation (34) thereof being limited to 360° by the co-operation of the stop (43) and the counter-stop (42).

## Revendications

1. Cisaille portable, de préférence pour l'usinage de la tôle, comprenant une lame (7) à coulisseau pouvant être animée d'un va-et-vient dans la direction de la course (5), avec entraînement motorisé et par l'intermédiaire d'un coulisseau (1), vis-à-vis d'au moins un tranchant (8) coopérant avec ladite lame, ainsi qu'un dispositif de réglage de la distance entre la lame (7) à coulisseau et le tranchant (8), dans la direction de la course (5), lequel dispositif englobe un entraînement de réglage (2, 3, 14) à filetage qui est en liaison, d'une part, avec le moteur d'entraînement (4) et d'autre part avec la lame (7) à coulisseau, qui peut être animé de mouvements conjointement au coulisseau (1) dans la direction de la course (5), et qui comprend au moins deux pièces filetées de réglage (2, 3, 14) mutuellement en prise par filetage, pièces dont au moins l'une (14) peut tourner autour d'un axe de filetage (25) s'étendant dans la direction de la course (5), au moyen d'une roue dentée de réglage (19) pouvant être entraînée et occupant avec son axe une position parallèle audit axe de filetage (25), en prenant appui dans le sens de rotation sur ladite roue dentée de réglage (19), par rapport à laquelle elle peut coulisser dans la direction de la course (5), **caractérisée par le fait que** la roue dentée de réglage (19) présente un passage axial (18) ; **par le fait que** la pièce filetée de réglage (14), associée à la roue dentée de réglage (19), traverse ladite roue dentée de réglage (19) avec mobilité vis-à-vis de cette dernière dans la direction de la course (5) ; et **par le fait que** la roue dentée de réglage (19) est réalisée sous la forme d'une roue conique droite et peut être entraînée par l'intermédiaire d'une roue menante (26) dans laquelle elle engrène, qui est semblablement réalisée en tant que roue conique droite, et dont l'axe de rotation (27) s'étend transversalement par rapport à l'axe de rotation (25) de ladite roue dentée de réglage (19).

2. Cisaille portable selon la revendication 1, **caractérisée par le fait que** la pièce filetée de réglage (14), associée à la roue dentée de réglage (19), est de réalisation du type cheville munie d'un tronçon axial (16) à filetage extérieur par lequel elle est en prise filetée avec un filetage intérieur (13) prévu sur une seconde pièce filetée de réglage (3) située du côté de la lame à coulisseau et matérialisant une partie (3) du coulisseau, avec faculté de rotation vis-à-vis de ladite seconde pièce filetée de réglage (3), autour d'un axe commun de filetage (25) ; et **par le fait qu'**elle est en liaison rotative, du côté axialement opposé à la seconde pièce filetée de réglage (3), avec une partie supplémentaire (2) dudit coulisseau qui est reliée au moteur d'entraînement (4).

3. Cisaille portable selon l'une des revendications précédentes, **caractérisée par le fait que** la pièce filetée de réglage (14) associée à la roue dentée de réglage (19) présente, sur des côtés axialement opposés, des tronçons filetés axiaux (15, 16) à filetages à pas inversés, par lesquels elle est en prise avec des filetages correspondants (12, 13) de deux autres pièces filetées de réglage (2, 3).

4. Cisaille portable selon l'une des revendications précédentes, **caractérisée par le fait que** le passage axial (18) de la roue dentée de réglage (19) possède une section transversale intérieure polygonale et la pièce filetée de réglage (14), associée à ladite roue dentée de réglage (19), possède un profil extérieur correspondant sur son tronçon axial prenant appui sur ladite roue dentée de réglage (19) dans le sens de rotation.

5. Cisaille portable selon l'une des revendications précédentes, la roue dentée de réglage (19) pouvant être entraînée au moyen d'un système d'actionnement manuel pouvant tourner autour d'un axe (34), **caractérisée par le fait qu'**il est prévu, en tant que système d'actionnement manuel, un volant (33) dont l'axe de rotation (34) s'étend transversalement par rapport à la direction respective de la course (5) du coulisseau (1) ou de la lame (7) à coulisseau.

6. Cisaille portable selon l'une des revendications précédentes, **caractérisée par le fait que** le volant (33) est relié, avec verrouillage rotatif, à une roue dentée de transmission (32) qui est coaxiale audit volant et engrène dans une roue de transmission (31) à denture extérieure reliée, coaxialement et avec verrouillage rotatif, à la roue menante (26) réalisée sous la forme d'une roue conique droite (26) et engrenant dans la roue dentée de réglage (19).

7. Cisaille portable selon l'une des revendications précédentes, **caractérisée par le fait que** l'entraînement de réglage (2, 3, 14) à filetage est en liaison avec un dispositif d'affichage comportant un affichage représentatif de la distance comprise entre la lame (7) à coulisseau et le tranchant (8) dans la direction de la course (5).

8. Cisaille portable selon l'une des revendications précédentes, **caractérisée par le fait que** le volant (33) est prévu en tant que partie du dispositif d'affichage et présente des repères (40) qui sont situés radialement à l'extérieur, qui sont mutuellement décalés dans le sens de rotation dudit volant (3 3), et auxquels un repère complémentaire (41) matérialisant une partie supplémentaire du dispositif d'affichage, est affecté sur une partie de carter de la cisaille portable, radialement voisine dudit volant (33), occupant une position fixe lors d'une rotation dudit volant (33), le repère (40) du volant (33), faisant face au repère complémentaire (41) de la partie du carter, étant représentatif de la distance comprise entre la lame (7) à coulisseau et le tranchant (8) dans la direction de la course (5).

9. Cisaille portable selon l'une des revendications précédentes, **caractérisée par le fait que** le volant (33) peut être encliqueté, dans différentes positions prises par rotation, sur un corps de base de ladite cisaille portable.

10. Cisaille portable selon l'une des revendications précédentes, **caractérisée par le fait qu'**il est prévu, pour le volant (33), une butée (43) agissant dans le sens de rotation de ce dernier, et à laquelle est associée une contre-butée (42) façonnée sur un corps de base de ladite cisaille portable, la coopération de la butée (43) et de la contre-butée (42) limitant, à 360°, l'angle de rotation du volant (33) autour de son axe de rotation (34).
